# EUROPEAN PATENT APPLICATION

(11) **EP 2 536 111 A1**
(43) Date of publication of application: **19.12.2012**
(21) Application number: 11169928.6
(22) Date of filing: 15.06.2011
(51) Int. Cl.: H04M 1/725, G06F 3/042

(54) **A method and a system for uploading applications on a mobile device**

(71) Applicant: Swisscom AG, 3050 Bern (CH)
(72) Inventor: Bueb, Daniel, 3007 Bern (CH); Seiler, Thomas, 3206 Rizenbach (CH)
(74) Representative: P&TS SA (AG, Ltd.)

(57) **Abstract**

It is disclosed a method for uploading the applications on a mobile device (20), the method comprising the steps of recording (100) an image (23, 43) of a display screen (11) of a first mobile device (10), wherein the display screen (11) displays one or more icons (12), which are representative of one or more applications stored on the first mobile device (10); processing (200) the image (23, 43) to identify the applications stored on the first mobile device (10) from the icons (12) shown in image (23,24); uploading (300) applications corresponding to the identified applications, into a second mobile device (20). The invention relates as well to a corresponding system.

## Description

### Field of the invention

The present invention concerns a method and a system for uploading applications on a mobile device according to the independent claims. Advantageous embodiments are given in the dependent claims.

### Description of related art

Today, most computer systems have functions for synchronizing your mails, calendars and contacts from one mobile device to another or to access the information from any other access point. However, no solution exists to automatically detect applications stored on a first mobile phone and to upload corresponding applications onto a second mobile phone so that the second mobile phone is provided with the same respectively a similar applications as are stored on first mobile phone. Such a solution would be particular difficult to achieve if when the operating systems of both mobile devices are different. Until now, one could only keep applications within one mobile phone respectively one mobile operating system with no possibility to transfer them to another mobile phone.

### Brief summary of the invention

It the aim of the present application to propose an easy method to detect applications stored on a first mobile device and to upload corresponding applications onto a second mobile device so that the second mobile device is provided with same respectively similar applications as are stored on first mobile device.

The present invention aims to provide a method which could be used independently of the operating systems of the mobile devices.

According to the invention, these aims are achieved by means of the independent claims, whereby the dependent claims give advantageous embodiments.

These claims are solved by the method comprising the steps of
recording an image of a display screen of a first mobile device, wherein the display screen displays one or more icons, which are representative of one or more applications stored on the first mobile device;
processing the image to identify the applications stored on the first mobile device from the icons shown in image;
uploading applications corresponding to the identified applications, into a second mobile device.

These claims are solved by the corresponding system according to independent device claim.

The invention is especially valid, when the first and the second mobile device have different operating systems so the same/similar applications can be matched or recommended for the second phone in an easy way.

In a first embodiment of the invention, the image is recorded with a camera in the second mobile device and the image is processed in the second mobile device and the applications corresponding to the identified applications, are uploaded directly over a mobile network into the second mobile device.

In a second embodiment of the invention, the image is recorded with a camera of a personal computer, the image is processed in the personal computer to identify the applications stored on the first mobile device from the icons shown in image, and the applications corresponding to the identified applications are uploaded into said personal computer and transferred to said second mobile device, which is connected to the personal computer. A direct connection over the mobile network from the webserver to the second mobile is also possible in this embodiment.

Possibly, the user can be asked to accept an application before an application is uploaded into the second mobile device and different applications can be proposed to the user to upload into the second mobile device, when an application cannot be clearly identified from an icon.

### Brief Description of the Drawings

The invention will be better understood with the aid of the description of an embodiment given by way of example and illustrated by the figures, in which:
Fig. 1 shows a first embodiment of the inventive system for uploading applications on a second mobile device;
Fig. 2 shows a second embodiment of the inventive system for uploading applications on a second mobile device; and
Fig. 3 shows schematically the steps of the inventive method.

### Detailed Description of possible embodiments of the Invention

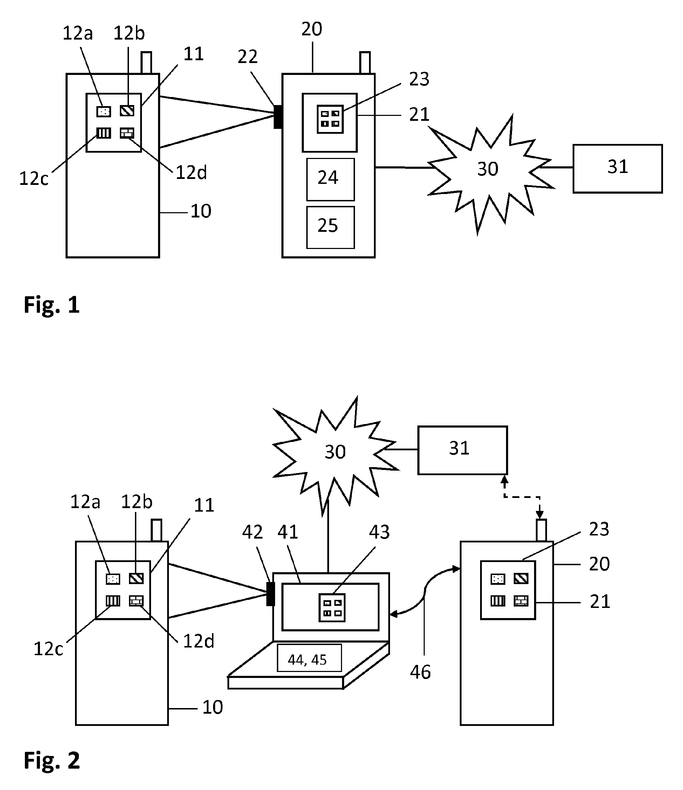

Fig. 1 shows a first embodiment of the inventive system for uploading applications on a second mobile device 20. The first mobile device 10, which can be a mobile telephone connected to a mobile network such as a GSM, UMTS, CDMA or any other suitable network, shows on a display screen 11 icons representing applications 12a, b, c, d, which are stored on the first mobile device 10. The mobile telephone is specifically a so called smart phone, which has a first operating system.

By means of an imaging means such as a camera 22 in second mobile device 20, an image 23 is taken of the display screen 11 of the first mobile device 10. The image 23 of the display 11 is shown in the display 21 of the mobile device 20. The second mobile device 20 can be a mobile telephone connected to a mobile network such as a GSM, UMTS, CDMA or any other suitable network. The second mobile device 20 is specifically a so called smart phone, which can have a second operating system different from the first operating system.

The second mobile device 20 comprises processing means 24 in order to process the image 23 to identify the applications stored on the first mobile device 10, from the icons shown in the image 23. In order to upload applications which correspond to the applications identified in the image 23, uploading means 25 are also provided in the second mobile device. The uploading means 25 and the entire second mobile device 20 are connected over the internet 30 to a web based application server 31.

Fig. 2 shows a second embodiment of the inventive system for uploading applications on a second mobile device 20 over a personal computer 40. In this embodiment a camera 42 of said personal computer 40 is taking an image 43 shown in the display 41. The personal computer 40 comprises processing means 44 in order to process the icons shown in the image 43 to identify the applications stored on the first mobile device 10. In order to upload applications corresponding to the applications identified in the image 43, uploading means 45 are also provided in the personal computer 40. The uploading means 45 and the personal computer 40 are connected over the internet 30 to a web based application server 31. The applications corresponding to an applications identified in the image 43 are downloaded into the personal computer 40 and transferred into the second mobile device 20 over a Near filed communication connection 46 such as wireless connection Bluetooth, ZigBee, HomeNFC, or a simple USB wire connection, etc. A direct connection over the mobile network from the webserver 31 to the second mobile 20 is also possible as indicated in Fig. 2. This step can simply be done in synchronizing step between the personal computer 40 and the second mobile device 40. In this embodiment the personal computer can comprise storing means (not shown) to store the identified applications on said personal computer 40.

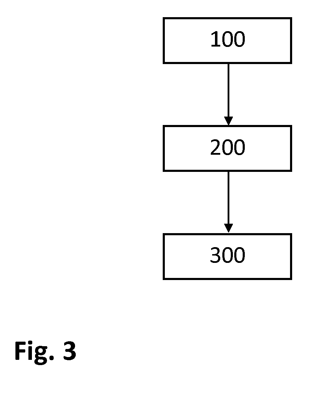

Fig. 3 shows schematically the steps of the inventive method, in which in step 100 an image of the display which shows icons representative of applications stored on the first mobile device is recorded. Step 200 the image is preprocessed in order to identify the icons, and thus determine the applications shored on the first mobile device; existing applications are recognized and mapped to existent applications in the web based server 31 and finally, the application could be selected manually by the user. This can be done by a html-push link. Additionally, this step can comprise the detecting the mobile type and/or the operating system of the first mobile device in order to accurately the applications in the first mobile. In the last step 300 the identified applications are uploaded into the second mobile device 20. In case when an application cannot be clearly identified from an icon 12, because e.g. different versions of the application exist or different application with a similar name, these applications are proposed to the user, who can select manually the desired application.

The inventions relates as well to a computer program product that can be loaded directly in a memory area of the personal computer 40 or the second mobile device 20 having a processor, with a program that executes the method of one of the annexed claims if it runs on said processor.

### Reference numbers

- 10: First mobile device
- 11: Display screen of first mobile device 10
- 12a, b, c,: d Icons representing applications on the first mobile device 10
- 20: Second mobile device
- 21: Display screen of second mobile device 20
- 22: Imaging means such as a camera
- 23: Image of the display screen 11
- 24: Processing means
- 25: Uploading means
- 30: Internet
- 31: Web based application server
- 40: Personal Computer
- 41: Display screen of Personal Computer 40
- 42: Camera of Personal Computer 40
- 43: Image of the display screen 11
- 44: Processing means
- 45: Uploading means
- 46: Near Field Communication NFC

- 100: Recording an image
- 200: Processing the icons shown in the image
- 300: Uploading the identified applications to a second mobile device

## Claims

1. A method for uploading applications on a mobile device (20), the method comprising the steps of
recording (100) an image (23, 43) of a display screen (11) of a first mobile device (10), wherein the display screen (11) displays one or more icons (12), which are representative of one or more applications stored on the first mobile device (10);
processing (200) the image (23, 43) to identify the applications stored on the first mobile device (10) from the icons (12) shown in image (23, 24);
uploading (300) applications corresponding to the identified applications, into a second mobile device (20).

2. The method according to claim 1, wherein the first and the second mobile device (10, 20) have different operating systems.

3. The method according to claim 1 or 2, wherein the image (23) is recorded with a camera (22) in the second mobile device (20) and the image (23, 43) is processed in the second mobile device (20) and the applications corresponding to the identified applications, are uploaded directly over a mobile network into the second mobile device (20).

4. The method according to claim 1 or 2, wherein the image (42) is recorded with a camera (42) of a personal computer (40), the image (23, 43) is processed in the personal computer (40) to identify the applications stored on the first mobile device (10) from the icons (12) shown in image (23,24), and the applications corresponding to the identified applications are uploaded into said personal computer (40) and transferred to said second mobile device (20), which is connected to the personal computer (40).

5. The method according to claim 1 to 4, wherein the applications corresponding to the identified applications are loaded into the second mobile device (20) from an internet based server (31).

6. The method according to claim 1 to 5, wherein the user is asked to accept manually an application before an application is uploaded into the second mobile device (20).

7. The method according to claim 1 to 6, wherein different applications are proposed to the user to upload into the second mobile device (20), when an application cannot be clearly identified from an icon (12).

8. The method according to claim 1 to 7, comprising the step of detecting the mobile type and/or the operating system of the first mobile device (10).

9. A system for uploading the applications on a mobile device, the system comprising,
imaging means (22, 42) suitable for recording an image (23, 43) of a display (11) of a first mobile device (10) on which one or more icons (12) which are representative of one or more applications stored on the first mobile device (10) are displayed;
processing means (24, 44) configured to identify applications stored on the first mobile device (10) from icons (12) shown in the image (23, 42); and
uploading means (25, 45) configured to upload applications corresponding to the identified applications, onto a second mobile device.

10. The system according to claim 9, wherein the first and the second mobile device (10, 20) are mobile phones and especially smart phones having different operating systems.

11. The system according to claim 9 or 10, wherein the imaging means (22, 42) is a camera of the second mobile phone (20) or of a personal computer (40).

12. The system according to claim 11, comprising storing means to store applications corresponding to the identified applications, on said personal computer (40).

13. The system according to any of the claims 9 to 12, wherein the processing means (24, 44) is an imaging processing device.

14. The system according to any of the claims 9 to 13, comprising an internet based server (31) on which the applications corresponding to the identified applications are stored.

15. Computer program product that can be loaded directly in a memory area of a personal computer (40) or mobile device (20) having a processor, with a program that executes the method of one of the claims 1 to 7 if it runs on said processor.
